# FASCICULE DE BREVET EUROPEEN

(11) **EP 4 085 402 B1**
(45) Date de publication et mention de la délivrance du brevet: **30.07.2025**
(21) Numéro de dépôt: 20845572.5
(22) Date de dépôt: 29.12.2020
(51) Int. Cl.: G08G 1/123, G08G 1/005, G08G 1/00, G06Q 10/02, B60R 25/24, G06Q 10/06, G06Q 30/06, G06Q 30/0645, G07C 5/00, G07C 5/02, H04W 4/029, H04W 4/46, H04W 4/33, G06Q 50/40, G07C 9/00, H04W 12/08

(54) **PROCEDE ET SYSTEME POUR ACTIVER L'ACCES A UN VEHICULE STATIONNE DANS UN LIEU NON COUVERT PAR UN RESEAU DE DONNEES**
VERFAHREN UND SYSTEM ZUM AKTIVIEREN DES ZUGANGS ZU EINEM FAHRZEUG, DAS IN EINEM NICHT DURCH EIN DATENNETZ ABGEDECKTEN BEREICH GEPARKT IST
METHOD AND SYSTEM FOR ACTIVATING ACCESS TO A VEHICLE PARKED IN AN AREA NOT COVERED BY A DATA NETWORK

(30) Priorité: 30.12.2019 FR 1915716
(43) Date de publication de la demande: 09.11.2022
(73) Titulaire: Vulog, 06200 Nice (FR)
(72) Inventeur: COLON, François, 13013 MARSEILLE (FR)
(74) Mandataire: Roman, Alexis
(86) Numéro de dépôt international: PCT/EP2020/087978
(87) Numéro de publication internationale: WO 2021/136779

(56) Documents cités:
- US-A1- 2011 112 969
- US-A1- 2016 093 216

## Description

### Domaine technique.

L'invention concerne un procédé, un système et un produit programme d'ordinateur pour activer l'accès à un véhicule stationné dans un lieu non couvert par un réseau de données.

Le domaine de l'invention concerne notamment la transmission de signaux sans fil entre un équipement utilisateur et des équipements embarqués dans des véhicules, et plus particulièrement la transmission de signaux permettant de contrôler lesdits véhicules (notamment leur ouverture et/ou leur prise de contrôle).

### État de la technique.

On connait des solutions permettant de réserver et d'activer l'ouverture du véhicule au moyen d'un équipement utilisateur. Les documents US2015/0137943 et US2016/093216 décrivent par exemple de telles solutions où un signal d'activation n'est reçu que par un seul véhicule.

Les systèmes actuels fonctionnent généralement de la même façon : un téléphone intelligent de l'utilisateur, de type Smartphone, se connecte à un serveur centralisé. Celui-ci comprend une base de données dans laquelle sont enregistrées les dernières positions connues des véhicules disponibles. En interrogeant cette base de données, l'utilisateur du Smartphone peut sélectionner un véhicule disponible et le réserver. Cette information de réservation est transmise au serveur, via un réseau de données, par exemple un réseau 4G. Toujours au travers du réseau, le serveur transmet l'information de réservation à un équipement informatique embarqué dans le véhicule. L'utilisateur se déplace près du véhicule et requiert une autorisation d'accès auprès du serveur. Celui-ci peut transmettre l'autorisation d'accès soit directement à l'équipement embarqué du véhicule soit au Smartphone, la transmission se faisant dans tous les cas au travers du réseau.

Or, il existe un problème lorsque le véhicule est garé dans un lieu non couvert par un réseau de données. Ni le Smartphone, ni l'équipement embarqué du véhicule ne peuvent échanger de données avec le serveur. Cela peut se produire dans des parkings souterrains ou dans des garages clos.

Le document FR3076651 décrit une solution permettant de transmettre à l'équipement embarqué du véhicule une autorisation d'accès, alors que ledit véhicule est hors réseau. Le serveur transmet préalablement au Smartphone l'autorisation d'accès. Le Smartphone et l'équipement embarqué peuvent ensuite s'échanger l'autorisation d'accès au moyen d'une liaison sans fil courte portée de type Bluetooth.

Cette solution peut toutefois présenter certaines lacunes. En effet, le serveur ne peut pas localiser précisément le véhicule dans la mesure où il est hors réseau (ses données de géo-localisation ne pouvant être communiquées au serveur). Le serveur connait éventuellement sa dernière position connue, généralement l'entrée du parking ou du garage, mais pas sa position finale précise. Le serveur va pouvoir informer l'utilisateur qu'un véhicule est disponible dans tel parking ou tel garage, mais sans pouvoir lui indiquer ni la place précise de stationnement, ni même l'étage. L'utilisateur va donc devoir rechercher par lui-même le véhicule concerné parmi une pluralité de véhicules. Cette recherche peut s'avérer extrêmement complexe et fastidieuse si le véhicule est garé au sein d'un parc de véhicules important et/ou si le parking ou le garage est vaste, avec plusieurs étages.

Un objectif de l'invention est de remédier aux inconvénients précités. Un autre objectif de l'invention est de proposer une méthode permettant d'assister efficacement l'utilisateur pour qu'il accède facilement à un véhicule stationné parmi une pluralité de véhicules hors réseau.

### Présentation de l'invention.

La solution proposée par l'invention est un procédé pour activer l'accès à un véhicule au sein d'un parc de véhicules stationnés dans un lieu de stationnement non couvert par un réseau de données, comprenant les étapes suivantes :
- émission d'un signal d'activation depuis un équipement informatique d'un utilisateur, laquelle émission est réalisée via une liaison sans fil de courte portée dans le lieu de stationnement,
- réception du signal d'activation par des équipements informatiques embarqués d'une pluralité de véhicules du parc de véhicules,
- mise en œuvre d'un processus informatique logique conduisant à l'élection d'au moins un véhicule parmi la pluralité de véhicules, lequel le processus est basé :
   -- sur une analyse du niveau de combustible disponible et/ou du niveau de charge électrique des véhicules de la pluralité de véhicules, ou
   -- sur une analyse l'intensité avec laquelle les équipements informatiques embarqués ont reçu le signal d'activation,
le processus informatique logique d'élection étant déclenché :
--- par la réception du signal d'activation par au moins un des équipements informatiques embarqués lequel processus d élection étant alors mis en œuvre dans ledit ou les équipements informatiques embarqués
   ou,
--- par la réception, par l'équipement utilisateur, du niveau de combustible disponible et/ou du niveau de charge électrique des véhicules de la pluralité de véhicules ou de l'intensité avec laquelle les équipements informatiques embarqués ont reçu le signal d'activation, lequel processus d'élection étant alors mis en œuvre dans ledit équipement utilisateur,
   - identification du véhicule élu :
      -- par l'émission, depuis le véhicule élu, d'une information de localisation dudit véhicule, et/ou
      -- par la transmission d'une ou plusieurs données d'identification du véhicule élu à l'équipement utilisateur, depuis l'équipement embarqué d'un véhicule de la pluralité de véhicules, laquelle transmission est réalisée via une liaison sans fil de courte portée dans le lieu de stationnement,
   - transmission d'une autorisation d'accès à l'équipement embarqué du véhicule élu, depuis l'équipement utilisateur, laquelle transmission est réalisée via une liaison sans fil de courte portée dans le lieu de stationnement,
   - activation de l'accès au véhicule élu suite à la réception de l'autorisation d'accès par l'équipement embarqué dudit véhicule.

Un dialogue intervient maintenant entre l'utilisateur et la pluralité de véhicules. Contrairement à la solution décrite dans le document FR3076651, ce n'est plus le serveur qui transmet préalablement à l'utilisateur l'identifiant du véhicule, mais c'est le véhicule lui-même qui se signale directement auprès de l'utilisateur. Le signal d'activation va être reçu par plusieurs véhicules situés à proximité de l'utilisateur (du fait de la liaison sans fil de courte portée), cette réception déclenchant un processus permettant d'élire un véhicule parmi cette pluralité de véhicule. Et c'est ce véhicule élu qui va se signaler à l'utilisateur en lui transmettant un moyen pour l'identifier. Le temps nécessaire à la recherche du véhicule va donc être considérablement réduit par rapport aux solutions connues de l'art antérieur.

D'autres caractéristiques avantageuses de l'invention sont listées ci-dessous. Chacune de ces caractéristiques peut être considérée seule ou en combinaison avec les caractéristiques remarquables définies ci-dessus,
- Selon un mode de réalisation, l'information de localisation consiste en un signal sonore et/ou visuel émis par le véhicule élu.
- Selon un mode de réalisation, l'information de localisation consiste en une information sur l'emplacement du véhicule élu dans le lieu de stationnement.
- Selon un mode de réalisation, le procédé comprend les étapes suivantes : - réception du signal d'activation par l'équipement informatique d'un premier véhicule de la pluralité de véhicules ; - transmission du signal d'activation depuis l'équipement informatique du premier véhicule, vers au moins l'équipement informatique d'un deuxième véhicule de la pluralité de véhicules ; - transmission du signal d'activation depuis l'équipement informatique du deuxième véhicule, vers au moins l'équipement informatique d'un troisième véhicule de la pluralité de véhicules ; et dans lequel la transmission du signal entre le premier véhicule, le deuxième véhicule et troisième véhicule est réalisée via une liaison sans fil de courte portée dans le lieu de stationnement.
- Selon un mode de réalisation, le procédé comprend une étape consistant à arranger les équipements embarqués sous forme d'un réseau sans fil maillé.
- Selon un mode de réalisation, le processus informatique logique d'élection comprend les étapes suivantes : - élaboration d'une liste sélectionnable dans laquelle les véhicules de la pluralité de véhicules sont classés par ordre décroissant de niveau de combustible et/ou de charge, chaque véhicule de la liste étant associé à un identifiant unique ; - transmission de la liste à l'équipement utilisateur, depuis l'équipement embarqué d'un véhicule de la pluralité de véhicules, laquelle transmission est réalisée via une liaison sans fil de courte portée dans le lieu de stationnement ; - sélection, depuis l'équipement utilisateur, d'un véhicule parmi les véhicules de la liste ; - transmission de l'identifiant unique du véhicule sélectionné, à l'équipement embarqué d'un véhicule de la pluralité de véhicules, depuis l'équipement utilisateur, laquelle transmission est réalisée via une liaison sans fil de courte portée dans le lieu de stationnement ; - achèvement du processus de sélection par l'élection du véhicule sélectionné.
- Selon un mode de réalisation, le procédé comprend les étapes suivantes : - enregistrement, dans une mémoire de chaque équipement embarqué des véhicules de la pluralité de véhicules, d'une liste d'identifiants utilisateurs et/ou d'identifiants d'équipements utilisateurs associés à des utilisateurs indésirables ;
- intégration, dans l'autorisation d'accès, d'un identifiant utilisateur et/ou d'un identifiant de l'équipement utilisateur ; - pour activer l'accès au véhicule élu, vérification préalable, par l'équipement embarqué dudit véhicule, que l'identifiant utilisateur et/ou l'identifiant de l'équipement utilisateur, ne sont pas enregistrés dans ladite liste.
- Selon un mode de réalisation, le procédé comprend une étape consistant à intégrer un identifiant dans le signal d'activation, lequel identifiant est adapté pour déclencher le processus informatique logique d'élection.
- Selon un mode de réalisation, la liaison sans fil de courte portée utilise un protocole de communication de la famille suivante : Bluetooth, Wifi, Z-Wave, ANT, ZIGBEE, Infrarouge.

Un autre aspect de l'invention concerne un système comportant au moins un équipement d'un utilisateur et au moins un équipement informatique embarqué d'un véhicule, pour la mise en œuvre des étapes du procédé selon l'une des caractéristiques précédentes.

Encore un autre aspect de l'invention concerne un produit programme d'ordinateur comprenant des instructions de code pour l'exécution d'un procédé selon l'une des caractéristiques précédentes, lorsqu'il est exécuté par au moins un équipement informatique embarqué d'un véhicule, le processus informatique logique d'élection dudit procédé étant déclenché par la réception du signal d'activation par ledit équipement informatique embarqué et mis en œuvre dans ledit équipement informatique embarqué.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] illustre un cas d'usage de l'invention lorsque plusieurs véhicules d'un parc sont susceptibles d'être réservés et sont stationnés dans un lieu non couvert par un réseau de donnée,
[Fig. 2] schématise l'agencement de différents éléments d'un équipement utilisateur et de plusieurs équipements informatiques embarqués dans des véhicules.
[Fig. 3a] est un exemple de réalisation des étapes d'un procédé conforme à l'invention, selon un premier mode de réalisation,
[Fig. 3b] est un exemple de réalisation des étapes d'un procédé conforme à l'invention, selon le premier mode de réalisation dans une variante de réalisation,
[Fig. 4a] est un exemple de réalisation des étapes d'un procédé conforme à l'invention, selon un deuxième mode de réalisation,
[Fig. 4b] est un exemple de réalisation des étapes d'un procédé conforme à l'invention, selon le deuxième mode de réalisation dans une variante de réalisation,
[Fig. 5] est un exemple de réalisation des étapes d'un procédé conforme à l'invention, selon un troisième mode de réalisation.

### Description des modes de réalisation.

Le procédé et le système objets de l'invention engendrent des manipulations d'éléments physiques, notamment des signaux (électriques ou magnétiques) et des données numériques, capables d'être stockés, transférés, combinés, comparés, ..., et permettant d'aboutir à un résultat souhaité.

L'invention met en œuvre une ou plusieurs applications informatiques exécutées par des équipements ou serveurs informatiques. Par souci de clarté, il faut comprendre au sens de l'invention que « *un équipement ou serveur fait quelque chose* » signifie « *l'application informatique exécutée par une unité de traitement de l'équipement ou du serveur fait quelque chose* ». Tout comme « *l'application informatique fait quelque chose* » signifie « *l'application informatique exécutée par l'unité de traitement de l'équipement ou du serveur fait quelque chose* »*.*

Encore par souci de clarté, la présente invention fait référence à un ou plusieurs « *processus informatiques logiques* »*.* Ces derniers correspondent aux actions ou résultats obtenus par l'exécution d'instructions de différentes applications informatiques. Aussi, il faut également comprendre au sens de l'invention que « *un processus informatique logique est adapté pour faire quelque chose* » signifie « *les instructions d'une application informatique exécutées par une unité de traitement font quelque chose* »*.*

Encore par souci de clarté, les précisions suivantes sont apportées à certains termes utilisés dans la description et les revendications :
- « *Ressource informatique* » peut être compris de façon non limitative comme : composant, matériel, logiciel, fichier, connexion à un réseau informatique, quantité de mémoire RAM, espace de disque dur, bande passante, vitesse de processeur, nombre de CPU, etc.
- « *Serveur informatique* » peut être compris de façon non limitative comme : dispositif informatique (matériel ou logiciel) comportant des ressources informatiques pour réaliser les fonctions d'un serveur et qui offre des services, ordinateur, pluralité d'ordinateurs, serveur virtuel sur internet, serveur virtuel sur Cloud, serveur virtuel sur une plate-forme, serveur virtuel sur une infrastructure locale, réseaux de serveurs, cluster, nœud, ferme de serveurs, ferme de nœuds, etc.
- « *Requête* » désigne un ordre d'exécution pouvant suivre un protocole de communication et comprenant des paramètres en entrée (question, informations, ...) et éventuellement des paramètres en retour (réponse, information, ...), pouvant se présenter dans un format lié au protocole employé.
- « *Unité de traitement* » peut être compris de façon non limitative comme : processeur, microprocesseurs, CPU (pour Central Processing Unit), etc.
- « *Application informatique* » peut être comprise comme : logiciel, programme informatique, micros-programme informatique, lignes de codes exécutables, software, etc.
- « *Réseau de données* » peut être compris de façon non limitative comme : réseau internet, réseau cellulaire, réseau satellite, etc. C'est un ensemble d'équipements informatiques reliés entre eux pour échanger, de manière sécurisée ou non, des informations et/ou des données selon un protocole de communication (ISDN, Ethernet, ATM, IP, CLNP, TCP, HTTP, ...).
- « *Base de données* » peut être comprise de façon non limitative comme un ensemble structuré et organisé de données enregistrées sur des supports accessibles par des équipements informatiques et pouvant être interrogées, lues et mises à jour. Des données peuvent y être insérées, récupérées, modifiées et/ou détruites. La gestion et l'accès à la base de données peuvent être assurés par un ensemble d'applications informatiques qui constituent un système de gestion de base de données (SGBD).
- « *Service* » peut être compris de façon non limitative comme l'ensemble des fonctionnalités proposé et assuré par un serveur et/ou par au moins un équipement informatique. Le service peut comprendre par exemple, les fonctionnalités suivantes : réservation d'un véhicule, localisation d'un véhicule, verrouillage/déverrouillage d'un véhicule, etc. Le service comprend notamment l'activation de l'accès à un véhicule alors que celui-ci est en dehors du réseau de données.
- « *Véhicule partagé* » peut être compris de façon non limitative comme un véhicule de location ou un véhicule en libre-service (en anglais « *car sharing* ») est un véhicule mis à la disposition de « clients » ou membres. Le véhicule peut être : une voiture autonome (apte à rouler sur route, sans intervention d'un conducteur), une voiture ou un camion (moteur thermique et/ou électrique), un deux-roues motorisé (moteur thermique et/ou électrique), un vélo (classique ou avec assistance électrique), une trottinette (classique ou avec assistance électrique), une planche à roulettes, un monocycle électrique, un gyropode, un bateau, etc. Lorsqu'un utilisateur utilise un véhicule partagé, il peut être facturé d'un certain montant dépendant généralement du nombre de kilomètres parcourus et/ou du temps d'utilisation du véhicule et/ou du modèle ou type de véhicule.
- Tel qu'utilisé ici, sauf indication contraire, l'utilisation des adjectifs ordinaux «premier», «deuxième», etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.

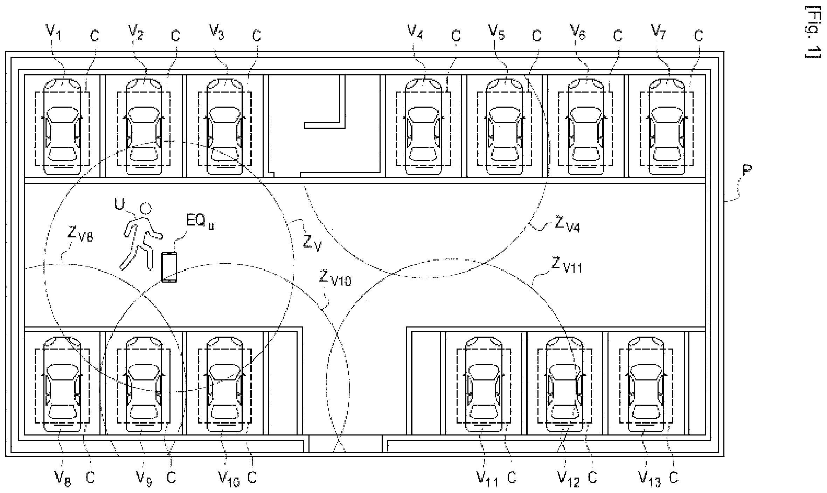

La figure 1 illustre des véhicules V₁-V₁₃ stationnés dans un lieu non couvert par un réseau de données, par exemple un parking souterrain P ou un garage. Tout ou partie de ces véhicules sont des véhicules partagés dont un utilisateur U souhaite avoir accès. À titre d'exemple illustratif, les véhicules V₄, V₈, V₁₀ et V₁₁ sont les véhicules partagés auxquels l'utilisateur U peut avoir accès (ci-après les « véhicules cibles »). Les autres véhicules sont par exemple des véhicules privés qui ne sont pas accessibles à l'utilisateur U. L'ensemble des véhicules V₁-V₁₃ est ici nommé « *parc de véhicules* ». Lorsqu'il pénètre dans le parking P, l'utilisateur U ne sait pas quels sont les véhicules cibles auxquels il peut avoir accès, ces véhicules ne pouvant généralement pas être distingués des autres véhicules du parc.

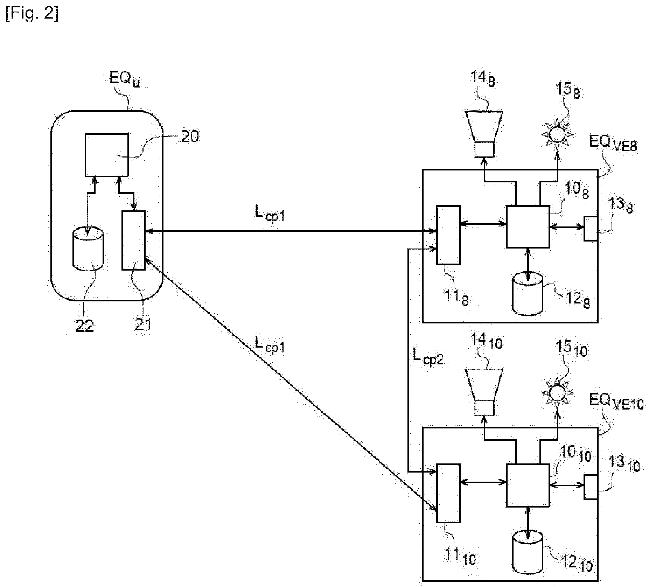

En se rapportant à la figure 2, chaque véhicule cible intègre un équipement informatique embarqué EQ_{VE8}, EQ_{VE10}. Cet équipement peut par exemple faire partie d'un boîtier télématique permettant au véhicule d'échanger des informations (ex : position géographique, vitesse, ...) avec le serveur distant présenté en partie introductive de la présente description, au travers d'un réseau de données. L'équipement informatique EQ_{VE8}, EQ_{VE10} peut également être un équipement dédié, indépendant du boîtier télématique.

Chaque équipement embarqué EQ_{VE8}, EQ_{VE10} comprend, entre autres ressources informatiques, une unité de traitement 10₈, 10₁₀, un émetteur/récepteur de signaux 11₈, 11₁₀ et une ou plusieurs mémoires 12₈, 12₁₀ dans laquelle est enregistrée une application informatique. Ces différents éléments sont connectés au moins à l'unité de traitement 10₈, 10₁₀ par un bus de communication.

Les instructions de l'application informatique enregistrée dans la mémoire 12₈, 12₁₀, lorsqu'elles sont exécutées par l'unité de traitement 10₈, 10₁₀, permettent de réaliser des étapes du procédé qui sont décrites plus avant dans la description. La mémoire 12₈, 12₁₀ est également adaptée pour enregistrer un certain nombre d'informations, lesquelles informations sont présentées plus avant dans la description.

L'émetteur/récepteur 11₈, 11₁₀ est adapté pour échanger des signaux, via une liaison sans fil de courte portée L_{CP1} avec l'équipement utilisateur EQu décrit plus avant dans la description et/ou avec les équipements embarqués des autres véhicules cibles, via une liaison sans fil de courte portée L_{CP2}. Les liaisons L_{CP1} et L_{CP2} ont par exemple une portée inférieure ou égale à 100 mètres, voire inférieure ou égale à 20 mètres.

Les signaux échangés sont préférentiellement des signaux infrarouges ou des signaux radiofréquences. Les liaisons L_{CP1} et L_{CP2} utilisent préférentiellement un protocole de communication de la famille suivante : Bluetooth, Wifi, Z-Wave, ANT, ZIGBEE, Infrarouge. Les liaisons L_{CP1} et L_{CP2} peuvent utiliser le même protocole de communication ou des protocoles distincts.

L'utilisateur U dispose d'au moins un équipement informatique EQu qui comporte une interface de communication, par exemple GSM, 3G, 4G ou Wifi, pour établir une liaison de communication sans fil avec le serveur distant présenté précédemment, au travers d'un réseau de données. L'équipement utilisateur EQu est préférentiellement un téléphone intelligent (Smartphone), une tablette numérique, un ordinateur portable, etc.

Sur la figure 2, l'équipement utilisateur EQu intègre une unité de traitement 20, un émetteur/récepteur de signaux 21 et une ou plusieurs mémoires 22 dans laquelle est enregistrée une application informatique pour la mise en œuvre du service (« application-service »). Ces différents éléments sont connectés au moins à l'unité de traitement 20 par un bus de communication. Il comprend également les ressources informatiques permettant de réaliser des étapes du procédé de l'invention. L'émetteur/récepteur 21 est similaire à celui des équipements embarqués EQ_{VE8}, EQ_{VE10}.

Selon un mode de réalisation, pour télécharger l'application-service, et avoir les droits d'accès au service, l'utilisateur U doit préalablement s'enregistrer auprès d'un serveur de gestion de droits qui peut être ou non le serveur distant précité. Selon un mode de réalisation, l'enregistrement de l'utilisateur U est réalisé auprès d'un service web du serveur distant associé au service. L'enregistrement comporte l'enregistrement d'un identifiant utilisateur et/ou d'un identifiant de l'équipement utilisateur EQu. Il peut s'agir d'un port, d'une adresse IP, d'une adresse MAC ou toute autre adresse ou combinaison permettant d'identifier un équipement utilisateur EQu. Selon un mode de réalisation, l'utilisateur U est préinscrit à partir d'un logiciel et est connu du fait qu'un identifiant est enregistré dans une base de données du serveur distant précité.

Sur la figure 1, la zone d'émission/réception de l'équipement utilisateur EQu est référencée Zu. Les zones d'émission/réception des équipements embarqués des véhicules cibles V₄, V₈, V₁₀ et V₁₁ sont respectivement référencées Z_{V4}, Z_{V8}, Z_{V10} et Z_{V11}. Ces zones d'émission/réception dépendent en partie de la puissance des émetteurs/récepteurs 11₈, 11₁₀ et 21. La zone Zu recoupe en partie les zones Z_{V8} et Z_{V10}. Les zones Z_{V4} et Z_{V11} ne sont pas recoupées par la zone Zu. Il en résulte que seuls les équipements embarqués EQ_{VE8} et EQ_{VE10} des véhicules cibles V₈ et V₁₀ vont pouvoir directement communiquer et échanger des données avec l'équipement utilisateur EQu. Les zones Z_{V8} et Z_{V10} se recoupent également entre-elles de sorte que les véhicules cibles V₈ et V₁₀ peuvent également directement communiquer et échanger des données entre eux au moyen de leur équipement embarqué EQ_{VE8}, EQ_{VE10} via la liaison sans fil de courte portée L_{CP2} (figure 2).

### Premier mode de réalisation

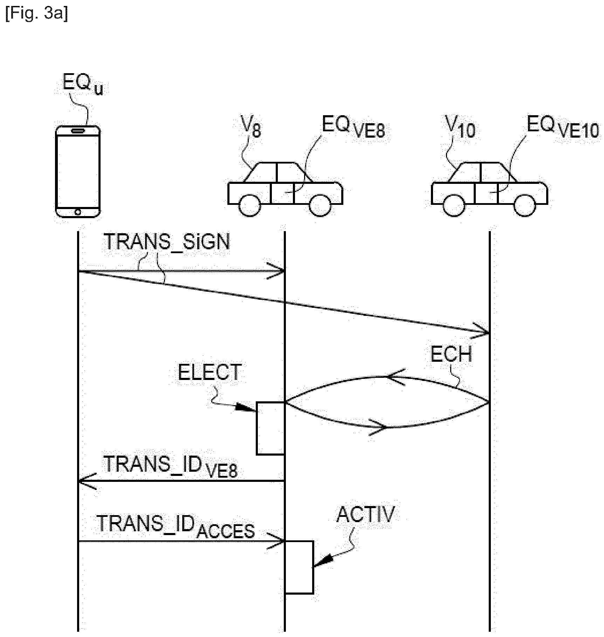

La figure 3a illustre des étapes d'un premier mode de réalisation du procédé selon l'invention, dans le cas d'usage de la figure 1 (utilisateur et véhicules hors réseau, dans le parking P). Dans ce mode de réalisation, l'équipement utilisateur EQu ne communique qu'avec les seuls équipements embarqués dont la zone d'émission/réception recoupe la zone Zu, c'est-à-dire les équipements EQ_{VE8} et EQ_{VE10} des véhicules cibles V₈ et V₁₀.

L'utilisateur U lance l'application-service sur son équipement EQu et émet, depuis ledit équipement, un signal d'activation. Cette étape est notée TRANS_SIGN. Ce signal d'activation est émis dans le parking P, via la liaison L_{CP1} (figure 2), en utilisant un protocole de type Bluetooth.

Le signal d'activation contient préférentiellement un identifiant adapté pour déclencher le processus informatique logique d'élection décrit plus avant dans la description. Cet identifiant est par exemple une signature propre à l'application-service ou une autre donnée similaire permettant d'indiquer que le signal d'activation a été émis par un utilisateur (ou un équipement utilisateur) ayant les droits d'accès au service (utilisateur autorisé). Cet identifiant permet de s'assurer que le processus informatique logique d'élection n'est déclenché que par un utilisateur autorisé et non pas par un autre utilisateur non-autorisé ayant déclenché l'émission d'un signal Bluetooth quelconque.

Le signal d'activation n'est ici reçu que par les équipements embarqués EQ_{VE8} et EQ_{VE10} des véhicules cibles V₈ et V₁₀. À réception du signal d'activation, les équipements EQ_{VE8} et EQ_{VE10} vont participer à la mise en œuvre un processus informatique logique conduisant à l'élection d'un de ces deux véhicules.

Dans le cas où le signal contient un identifiant, les équipements embarqués EQ_{VE8} et EQ_{VE10} vont l'analyser pour vérifier que le signal provient bien d'un utilisateur autorisé. Cette vérification peut par exemple être opérée en comparant l'identifiant reçu à un identifiant enregistré dans la mémoire 12₈, 12₁₀. Le processus d'élection ELECT n'est alors déclenché qu'après cette étape de vérification.

Le processus d'élection ELECT est basé sur une analyse du niveau de combustible (dans le cas d'un moteur thermique) et/ou du niveau de charge électrique (dans le cas d'un moteur électrique) des véhicules V₈ et V₁₀. Le véhicule élu sera celui qui a le niveau de combustible ou le niveau de charge le plus élevé. En se rapportant à la figure 3a, durant une étape d'échange d'information ECH, les équipements embarqués EQ_{VE8}, EQ_{VE10} vont s'échanger leur niveau de combustible ou de charge respectif. Chaque équipement embarqué EQ_{VE8}, EQ_{VE10} va par exemple interroger un capteur de jauge installé dans un réservoir de combustible du véhicule ou un capteur de charge connecté à un système de batteries d'un moteur électrique du véhicule.

À titre d'exemple, les véhicules V₈ et V₁₀ sont tous deux pourvus de moteur électrique (respectivement thermique) et c'est le véhicule cible V₈ qui a le niveau de charge (respectivement de combustible) le plus élevé. Le processus d'élection ELECT s'achève alors par l'élection du véhicule cible V₈.

Selon un autre exemple, le véhicule V₈ comprend un moteur thermique et le véhicule V₁₀ comprend un moteur électrique. Le niveau de combustible dans le véhicule V₈ permet de rouler plus longtemps que ne le permet le niveau de charge dans le véhicule V₁₀. Le processus d'élection ELECT s'achève ici encore par l'élection du véhicule cible V₈.

Selon un autre mode de réalisation, le processus d'élection ELECT consiste à déterminer l'intensité avec laquelle les équipements embarqués EQ_{VE8} et EQ_{VE10} ont reçu le signal d'activation. Le véhicule élu sera celui qui a reçu le signal d'activation avec l'intensité la plus forte. Ce véhicule est généralement celui qui est le physiquement le plus proche de l'utilisateur U. Durant l'étape d'échange d'information ECH, les équipements embarqués EQ_{VE8}, EQ_{VE10} des véhicules V₈ et V₁₀ vont s'échanger le niveau d'intensité avec lequel ils ont respectivement reçu le signal d'activation. À titre d'exemple, c'est l'équipement embarqué EQ_{VE8} qui reçoit le signal d'activation avec l'intensité la plus forte de sorte que le véhicule cible V₈ est élu.

Le processus d'élection ELECT peut être mis en œuvre dans l'équipement embarqué EQ_{VE8}, ou dans l'équipement embarqué EQ_{VE10}, ou simultanément dans ces deux équipements. Un des deux équipements embarqués peut être considéré comme un équipement maître assurant la mise en œuvre du processus d'élection. L'autre équipement est alors considéré comme un équipement esclave communiquant seulement des informations (niveau de combustible ou de charge, intensité du signal d'activation, ...) à l'équipement maître. Selon un mode de réalisation, l'équipement maître est celui recevant en premier le signal d'activation (ex : l'équipement EQ_{VE10}). Selon un autre mode de réalisation, l'équipement maître est celui recevant le signal d'activation avec l'intensité la plus forte (ex : l'équipement EQ_{VE8}).

Suite à son élection, le véhicule élu V₈ s'identifie auprès de l'utilisateur U. Selon un mode de réalisation, cette étape d'identification comprend la transmission d'une ou plusieurs données d'identification ID_{VE8} du véhicule élu V₈, à l'équipement utilisateur EQu (étape TRANS_ID_{VE8}). Cette transmission peut être réalisée depuis l'équipement EQ_{VE8} du véhicule élu V₈, ou depuis l'équipement maître (qui peut être l'équipement EQ_{VE8} ou l'équipement EQ_{VE10}). Cette transmission est réalisée via la liaison L_{CP1} (figure 2), dans le parking P. Une transmission via une autre liaison sans fil de courte portée utilisant un autre protocole de communication plus sécurisé peut toutefois être envisagée.

La ou les données d'identification ID_{VE8} du véhicule élu V₈ se présentent avantageusement sous la forme du code (numérique ou alphanumérique) de sa plaque d'immatriculation, auquel est préférentiellement ajoutée une indication de son modèle et de sa couleur et/ou son image ou photo. Ces informations permettent à l'utilisateur d'identifier très simplement et très rapidement le véhicule élu V₈ parmi tous les autres véhicules V₁-V₁₃.

Selon un autre mode de réalisation qui se combine ou se substitut à la transmission TRANS_ID_{VE8} de la ou des données d'identification ID_{VE8}, l'étape d'identification du véhicule élu V₈ comprend l'émission, depuis ledit véhicule élu, d'une information de localisation dudit véhicule. Cette information de localisation consiste avantageusement en un signal sonore et/ou visuel émis par le véhicule élu V₈. En se rapportant à la figure 2, l'unité de traitement 10₈ de l'équipement embarqué EQ_{VE8}, peut activer temporairement, pendant quelques secondes par exemple, un avertisseur sonore 14₈ (klaxon) et/ou des feux de détresse ou de croisement 15₈ du véhicule élu V₈. L'utilisateur U peut ainsi identifier très simplement et très rapidement le véhicule élu V₈ parmi tous les autres véhicules V₁-V₁₃.

L'information de localisation peut également consister en une information sur l'emplacement du véhicule élu V₈ dans le parking P (numéro de place, étage, ....). Pour ce faire, et comme illustré sur la figure 1, chaque place de stationnement est avantageusement équipée d'un capteur de présence C. Ce capteur C peut être un capteur inductif (ex : à boucle inductive), un capteur capacitif, un capteur de présence magnétique (ex : magnétomètre), un capteur de présence à ultrason, ou autre, intégré dans le revêtement de sol de la place. Ce capteur C a en mémoire le numéro, et éventuellement l'étage, de la place de stationnement. Sur la figure 2, l'équipement embarqué EQ_{VE8} intègre ou est relié à un lecteur 13₈ adapté pour communiquer avec le capteur C et récupérer ce numéro de la place de stationnement et éventuellement l'étage. Cette information est alors transmise à l'équipement utilisateur EQu, par exemple en même temps que la ou les données d'identification ID_{VE8}. Connaissant la position exacte du véhicule élu V₈ dans le parking P, l'utilisateur U le retrouver très facilement.

L'étape d'identification du véhicule élu V₈, selon les modes de réalisation décrits précédemment, peut être exécutée suite à l'élection du véhicule V₈, ou suite à la réception de l'autorisation d'accès ID_{ACCES}.

Après avoir identifié le véhicule élu V₈, l'utilisateur U transmet (étape TRANS_ID_{ACCES}), depuis son équipement EQu, une autorisation d'accès ID_{ACCES} à l'équipement EQ_{VE8} dudit véhicule. L'utilisateur U ayant maintenant toutes les informations pour identifier le véhicule élu V₈, il lui est très facile de le retrouver. Aussi, l'autorisation d'accès ID_{ACCES} est préférentiellement transmise directement à l'équipement EQ_{VE8}. On peut toutefois prévoir une transmission indirecte, via l'équipement EQ_{VE10}, dans le cas où ce dernier est l'équipement maître. C'est celui-ci qui transmet alors l'autorisation d'accès ID_{ACCES} à l'équipement EQ_{VE8}.

La transmission TRANS_ID_{ACCES} se fait préférentiellement au travers de la liaison L_{CP1} précitée. Une transmission via une autre liaison sans fil de courte portée utilisant un autre protocole de communication plus sécurisé, peut toutefois être envisagée.

L'autorisation d'accès ID_{ACCES} intègre préférentiellement l'identifiant utilisateur et/ou l'identifiant de l'équipement utilisateur EQu et/ou un secret partagé avec les véhicules cibles V₄, V₈, V₁₀ et V₁₁. Ce secret peut notamment être transmis à l'équipement utilisateur EQu, par le serveur distant précité, au moment de l'inscription de l'utilisateur U, et enregistré dans la mémoire 22. Ce secret est également enregistré dans la mémoire des équipements embarqués des véhicules cibles V₄, V₈, V₁₀ et V₁₁.

Il se peut qu'un utilisateur soit enregistré auprès du serveur distant, mais inscrit sur une liste noire ou sur une liste d'utilisateurs indésirables (utilisateur « blacklisté »). C'est par exemple le cas lorsque cet utilisateur n'a pas payé son abonnement au service ou qu'il n'a pas payé une utilisation antérieure d'un véhicule partagé. Cet utilisateur indésirable ne doit pas pouvoir accéder aux véhicules cibles. Le serveur distant sait que cet utilisateur est blacklisté (via une mise à jour de sa base de données). Toutefois, dans les conditions de l'invention, l'équipement EQ_{VE8} du véhicule élu V₈ ne le sait pas forcément. En effet, étant hors réseau, il ne peut pas interroger le serveur distant pour vérifier les droits d'accès au service de l'utilisateur. Pour remédier à cela, on prévoit préférentiellement que, dès qu'un véhicule retrouve le réseau, son équipement embarqué se connecte au serveur distant pour récupérer automatiquement une liste noire des identifiants utilisateurs et/ou des identifiants des équipements utilisateurs EQu associés à des utilisateurs blacklistés. Cette liste noire est alors enregistrée dans la mémoire de chaque équipement embarqué. On s'assure ainsi que cette liste noire est régulièrement mise à jour.

Aussi, après avoir reçu l'autorisation d'accès ID_{ACCES}, et pour autoriser l'accès au véhicule élu V₈, le procédé peut comporter une étape préalable de vérification de l'identifiant utilisateur et/ou de l'identifiant de l'équipement utilisateur EQ_{U} pour s'assurer que ces identifiants ne sont pas enregistrés dans la liste noire. Cette étape de vérification est opérée par l'équipement EQ_{VE8} du véhicule élu V₈ ou par l'équipement maître (ex : l'équipement EQ_{VE10}).

Suite à la réception de l'autorisation d'accès ID_{ACCES} (et, le cas échéant, suite à l'étape de vérification précitée), l'équipement EQ_{VE8} du véhicule élu V₈ active l'accès audit véhicule (étape ACTIV) et notamment son ouverture ou son déverrouillage. L'utilisateur U peut alors pénétrer dans l'habitacle du véhicule élu V₈, le démarrer et l'utiliser normalement.

Dès que le véhicule V₈ retrouve le réseau de données, il transmet au serveur distant des données sauvegardées dans sa mémoire telles que : identifiant unique du véhicule, identifiant de l'utilisateur U et/ou de son équipement EQu, indication sur son statut (ex : « occupé - indisponible à la réservation »), ainsi que toutes autres données généralement transmises par un boîtier télématique (position GPS, vitesse, ....).

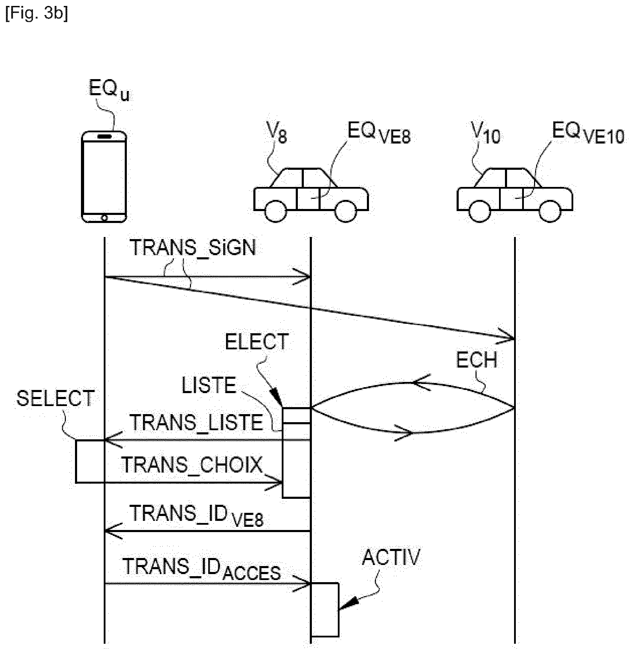

La figure 3b illustre une variante de réalisation du premier mode de réalisation. Le processus d'élection ELECT comprend une étape d'intermédiaire d'élaboration d'une liste sélectionnable LISTE dans laquelle les véhicules V₈ et V₁₀ sont classés par ordre décroissant (ou alternativement par ordre croissant) de niveau de combustible et/ou de charge. En reprenant l'exemple précité, le véhicule V₈ est classé en premier et le véhicule V₁₀ en second.

Chaque véhicule de la liste est préférentiellement associé à un identifiant unique (par exemple un code numérique ou alphanumérique unique attribué à chaque véhicule et enregistré dans la mémoire de ce dernier), une indication de son modèle et de sa couleur et/ou son image ou photo.

Cette liste est transmise à l'équipement utilisateur EQu (étape TRANS_LISTE), depuis l'équipement EQ_{VE8} du véhicule V₈ classé en premier, ou depuis l'équipement maître (qui peut être l'équipement EQ_{VE8} ou l'équipement EQ_{VE10}). Cette transmission est réalisée via la liaison L_{CP1} ou via une autre liaison plus sécurisée.

L'utilisateur U sélectionne (SELECT), depuis son équipement utilisateur EQu, un véhicule parmi les véhicules de la liste. Dans l'exemple de la figure 3b, le véhicule V₈ est sélectionné par l'utilisateur U (mais ce pourrait être l'autre véhicule V₁₀ si son modèle lui convient davantage).

Le choix de l'utilisateur U est transmis (étape TRANS_CHOIX) depuis son équipement EQu, soit directement à l'équipement EQ_{VE8} du véhicule sélectionné V₈, soit indirectement, via l'équipement EQ_{VE10}, dans le cas où celui-ci est l'équipement maître. Les données transmises comprennent notamment l'identifiant unique du véhicule V₈ sélectionné. Cette transmission est réalisée via la liaison L_{CP1} ou via une autre liaison plus sécurisée.

Dès que le choix de l'utilisateur est reçu par l'équipement embarqué EQ_{VE8} et/ou EQ_{VE10} en charge de la mise en œuvre du processus d'élection ELECT, ledit processus s'achève par l'élection du véhicule V₈ sélectionné par l'utilisateur.

### Deuxième mode de réalisation

Dans le premier mode de réalisation qui vient d'être décrit et exemplifié, l'utilisateur n'a potentiellement accès qu'aux deux véhicules cibles V₈ et V₁₀ dont les zones d'émission/réception Z_{V8}, Z_{V10} recoupent la zone d'émission/réception Zu de l'équipement utilisateur EQu. Les zones Z_{V4} et Z_{V11} n'étant pas recoupées par la zone Zu, les équipements embarqués EQ_{VE4}, EQ_{VE11} ne reçoivent pas directement le signal d'activation TRANS_SIGN de sorte que les véhicules V₄ et V₁₁ ne participent pas au processus d'élection. Il peut cependant être avantageux qu'un nombre supérieur de véhicules y participent, ne serait-ce que pour proposer un choix plus large de véhicules à l'utilisateur U.

Sur la figure 1, la zone d'émission/réception Zu recoupe les zones d'émission/réception Z_{V8} et Z_{V10}, mais pas les zones d'émission/réception Z_{V4} et Z_{V11}. Toutefois, la zone d'émission/réception Z_{V10} recoupe la zone d'émission/réception Z_{V11}. Et la zone d'émission/réception Z_{V11} recoupe la zone d'émission/réception Z_{V4}. Il en résulte que :
- les équipements embarqués EQ_{VE8} et EQ_{VE10} peuvent directement communiquer et échanger des données avec l'équipement utilisateur EQ_{U ;}
- les équipements embarqués EQ_{VE10} et EQ_{VE11} peuvent directement communiquer et échanger des données entre eux ;
- les équipements embarqués EQ_{VE11} et EQ_{VE4} peuvent directement communiquer et échanger des données entre eux.

Les équipements embarqués EQ_{VE4}, EQ_{VE8}, EQ_{VE10}, EQ_{VE11} sont ainsi arrangés en réseau sans fil maillé (« mesh work » en anglais). En effet, toutes les zones d'émission/réception Z_{V4}, Z_{V8}, Z_{V10} et Z_{V1} se juxtaposent, chaque équipement embarqué pouvant communiquer avec le ou les autres équipements embarqués du réseau qui sont situés dans sa propre zone d'émission/réception. Par exemple, l'équipement embarqué EQ_{VE4} communique uniquement avec l'équipement embarqué EQ_{VE11} tandis que ce dernier peut communiquer non seulement avec l'équipement embarqué EQ_{VE4}, mais également avec l'équipement embarqué EQ_{VE10}. À titre d'exemple, le nombre de véhicules participant au réseau est compris entre 2 et 50.

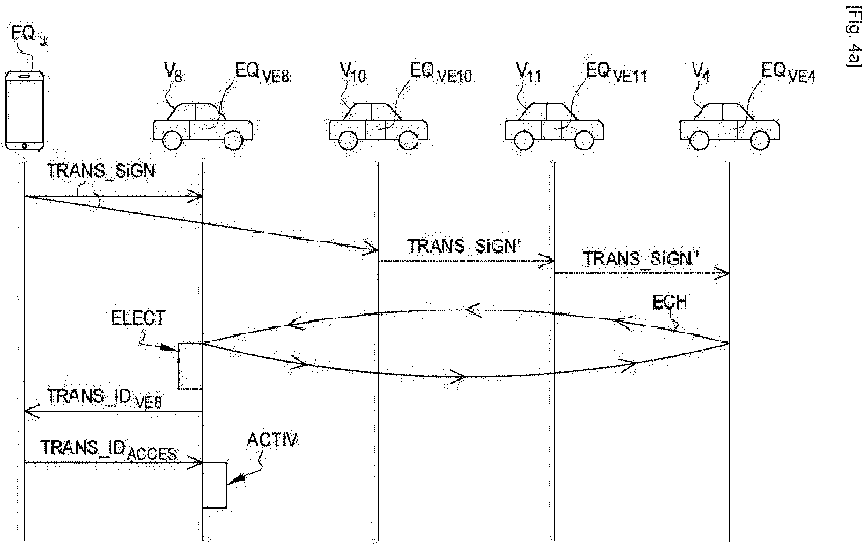

Ainsi, et en se rapportant à la figure 4a, le signal d'activation est transmis (étape TRANS_SIGN), depuis l'équipement utilisateur EQu, aux équipements embarqués EQ_{VE8} et EQ_{VE10}, via la liaison L_{CP1}. À réception du signal d'activation, l'équipement embarqué EQ_{VE10} réémet (via la liaison L_{CP2}) ledit signal vers l'équipement embarqué EQ_{VE11} (étape TRANS_SIGN'). Et à réception du signal d'activation, l'équipement embarqué EQ_{VE11} réémet ledit signal (via la liaison L_{CP2}) vers l'équipement embarqué EQ_{VE4} (étape TRANS_SIGN"). Le signal d'activation est de ce fait reçu par tous les équipements embarqués des véhicules cibles. Bien évidemment, le signal réémis par un équipement embarqué peut être reçu simultanément par plusieurs autres équipements embarqués si leur zone d'émission/réception respective se recoupent.

Selon un mode de réalisation, les équipements embarqués EQ_{VE4}, EQ_{VE8} EQ_{VE10}, EQ_{VE11} ne réémettent qu'une seule fois le signal d'activation. Cela évite que le signal d'activation soit réémis indéfiniment. Par exemple, lorsque l'équipement embarqué EQ_{VE10} reçoit le signal d'activation à l'étape TRANS_SIGN, et le réémet à l'étape TRANS_SIGN', ces évènements sont sauvegardés dans sa mémoire. Quand l'équipement embarqué EQ_{VE11} réémet le signal d'activation à l'étape TRANS_SIGN", ledit signal est à nouveau reçu par l'équipement embarqué EQ_{VE10}. Celui-ci constatant qu'il a déjà reçu et émis le signal d'activation, il ne le réémettra pas de nouveau.

À réception du signal d'activation, tous les équipements embarqués EQ_{VE4}, EQ_{VE8}, EQ_{VE10}, EQ_{VE11} vont participer à la mise en œuvre du processus d'élection ELECT. Celui-ci est similaire au processus d'élection décrit précédemment en référence au premier mode de réalisation. En particulier, les équipements embarqués vont s'échanger des informations (ex : niveau respectif de combustible et/ou de charge, intensité du signal d'activation reçu, ...) durant l'étape ECH. Les informations sont communiquées de proche en proche au travers du réseau sans fil maillé. Le processus d'élection ELECT peut être mis en œuvre dans un seul équipement embarqué (ex : dans EQ_{VE8}) ou simultanément dans tous les équipements embarqués. Un des équipements embarqués peut être un maître, les autres étant des esclaves.

Les étapes d'identification du véhicule élu, de transmission de l'autorisation d'accès TRANS_ID_{ACCES} et d'activation ACTIV de l'accès audit véhicule élu, sont similaires à celles décrites précédemment en référence au premier mode de réalisation.

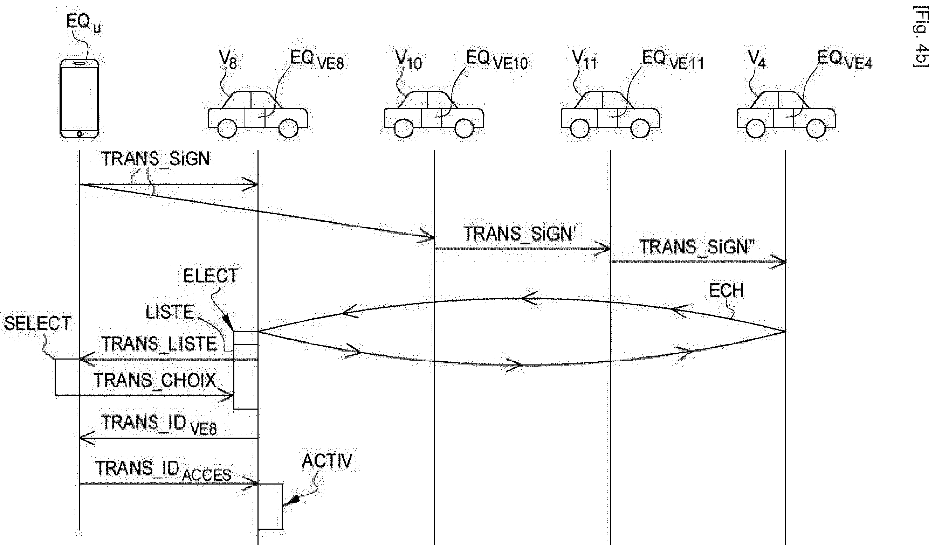

La figure 4b illustre une variante de réalisation du deuxième mode de réalisation. Le processus d'élection ELECT comprend une étape d'intermédiaire d'élaboration d'une liste sélectionnable LISTE dans laquelle tous les véhicules V₄, V₈, V₁₀ et V₁₁ sont classés par ordre décroissant de niveau de combustible et/ou de charge. Cette liste est donc plus élargie que celle décrite en référence à la figure 3a, et offre davantage de choix à l'utilisateur U. Cette étape d'élaboration de la liste ainsi que les autres étapes de transmission TRANS_LISTE, de sélection d'un véhicule SELECT, et de transmission du choix de l'utilisateur TRANS_CHOIX, sont similaires à celles décrites en référence à la figure 3a.

### Troisième mode de réalisation

Dans les premier et deuxième modes de réalisation, le processus d'élection ELECT est mis en œuvre dans un ou plusieurs des équipements embarqués EQ_{VE4}, EQ_{VE8} EQ_{VE10}, EQ_{VE11}. Dans ce troisième mode de réalisation, le processus d'élection ELECT est mis en œuvre dans l'équipement utilisateur EQu.

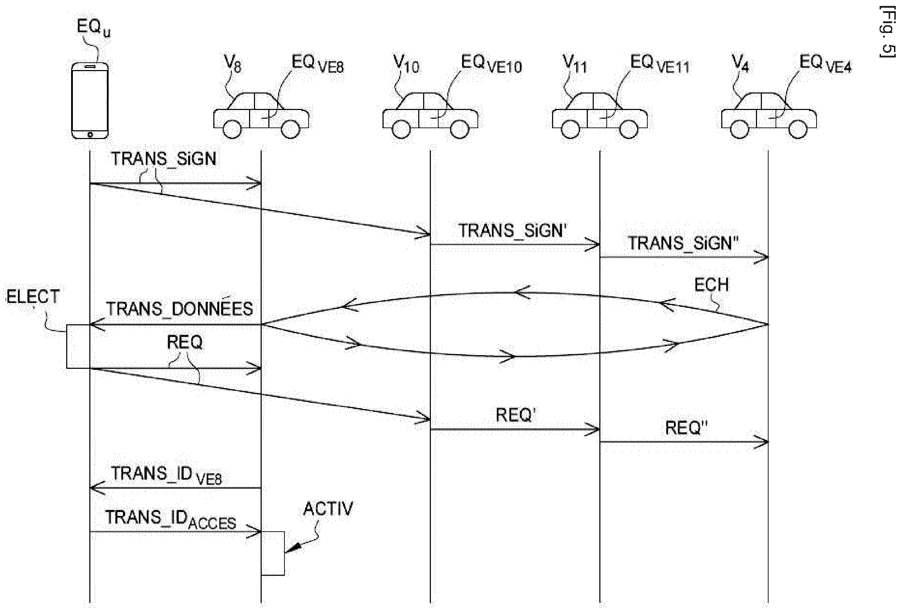

En se rapportant à la figure 5, à l'issue de l'étape d'échange d'informations ECH, les informations échangées (ex : niveau respectif de combustible et/ou de charge, intensité du signal d'activation reçu, ...) sont transmises (étape TRANS_DONNEES) à l'équipement utilisateur EQu. Les informations fournies par un véhicule sont préférentiellement associées à l'identifiant unique dudit véhicule. Cette transmission est réalisée depuis un des équipements embarqués, par exemple depuis l'équipement EQ_{VE8} ayant reçu le signal d'activation avec l'intensité la plus forte ou depuis un autre équipement considéré comme maître. Cette transmission est réalisée via la liaison L_{CP1} ou via une autre liaison plus sécurisée.

Dès lors que l'équipement utilisateur EQu reçoit ces informations, il les analyse pour élire un des véhicules cibles. Comme décrit précédemment, cette élection peut être basée sur le niveau de combustible ou de charge des véhicules, sur l'intensité du signal d'activation reçu, ou suite à une sélection du véhicule dans la liste des véhicules cibles élaborée par l'équipement utilisateur EQu.

Après avoir élu le véhicule (ex : le véhicule V₈), l'utilisateur U émet, depuis son équipement EQu, une requête d'identification dudit véhicule (étape REQ). Comme pour le signal d'activation, cette requête est transmise directement aux équipements embarqués EQ_{VE8} et EQ_{VE10}, puis, de proche en proche, vers les équipements embarqués EQ_{VE11} et EQ_{VE4} (étapes REQ' et REQ"). Cette transmission est réalisée via la liaison L_{CP2}.

La requête d'identification contient l'identifiant unique du véhicule élu. À réception de la requête, l'équipement embarqué EQ_{VE8} du véhicule élu V₈ reconnait son identifiant unique et s'identifie auprès de l'utilisateur U. Cette étape d'identification est similaire à celle décrite précédemment en référence aux premier et deuxième modes de réalisation.

### Système

Selon un autre aspect, l'invention concerne en particulier un système comportant l'équipement utilisateur EQu et au moins un des équipements embarqués EQ_{VE4}, EQ_{VE8}, EQ_{VE10}, EQ_{VE11}, configurés pour mettre en œuvre le procédé selon l'invention.

### Produit programme d'ordinateur

Selon encore un autre aspect, l'invention concerne un produit programme d'ordinateur comprenant des instructions de code pour l'exécution du procédé selon l'invention, lorsqu'il est exécuté par au moins un des équipements embarqués EQ_{VE4}, EQ_{VE8}, EQ_{VE10} et/ou EQ_{VE11}.

L'agencement des différents éléments et/ou moyens et/ou étapes de l'invention, dans les modes de réalisation décrits ci-dessus, ne doit pas être compris comme exigeant un tel agencement dans toutes les implémentations. Notamment, une ou plusieurs caractéristiques et/ou étapes exposées seulement dans un mode de réalisation peuvent être généralisées aux autres modes de réalisation. De même, une ou plusieurs caractéristiques et/ou étapes exposées seulement dans un mode de réalisation peuvent être combinées avec une ou plusieurs autres caractéristiques et/ou étapes exposées seulement dans un autre mode de réalisation.

## Revendications

1. Procédé pour activer l'accès à un véhicule au sein d'un parc de véhicules (V₁-V₁₃) stationnés dans un lieu de stationnement (P) non couvert par un réseau de données, comprenant les étapes suivantes :
- émission (TRANS_SIG) d'un signal d'activation depuis un équipement informatique (EQ_{U}) d'un utilisateur (U), laquelle émission est réalisée via une liaison sans fil de courte portée (L_{CP1}) dans le lieu de stationnement (P),
- réception du signal d'activation par des équipements informatiques embarqués (EQ_{VE8}, EQ_{VE10}) d'une pluralité de véhicules (V₈, V₁₀) du parc de véhicules (V₁-V₁₃),
- mise en œuvre d'un processus informatique logique (ELECT) conduisant à l'élection d'au moins un véhicule (V₈) parmi la pluralité de véhicules (V₈, V₁₀), lequel le processus est basé :
-- sur une analyse du niveau de combustible disponible et/ou du niveau de charge électrique des véhicules de la pluralité de véhicules (V₈, V₁₀), ou
-- sur une analyse de l'intensité avec laquelle les équipements informatiques embarqués (EQ_{VE8} EQ_{VE10}) ont reçu le signal d'activation,
le processus informatique logique d'élection (ELECT) étant déclenché :
**---** par la réception du signal d'activation par au moins un des équipements informatiques embarqués (EQ_{VE8}, EQ_{VE10}), lequel processus d'élection étant alors mis en œuvre dans ledit ou les équipements informatiques embarqués ou,
--- par la réception, par l'équipement utilisateur (EQ_{U}), du niveau de combustible disponible et/ou du niveau de charge électrique des véhicules de la pluralité de véhicules (V₈, V₁₀) ou de l'intensité avec laquelle les équipements informatiques embarqués (EQ_{VE8}, EQ_{VE10}) ont reçu le signal d'activation, lequel processus d'élection étant alors mis en œuvre dans ledit équipement utilisateur,
- identification du véhicule élu :
-- par l'émission, depuis le véhicule élu (V₈), d'une information de localisation dudit véhicule, et/ou
-- par la transmission (TRANS_ID_{VE8}) d'une ou plusieurs données d'identification (ID_{VE8}) du véhicule élu (V₈) à l'équipement utilisateur (EQ_{U}), depuis l'équipement embarqué (EQ_{VE8}, EQ_{VE10}) d'un véhicule de la pluralité de véhicules (V₈, V₁₀), laquelle transmission est réalisée via une liaison sans fil de courte portée (L_{CP1}) dans le lieu de stationnement (P),
- transmission (TRANS_ID_{ACCES}) d'une autorisation d'accès (ID_{ACCES}) à l'équipement embarqué (EQ_{VE8}) du véhicule élu (V₈), depuis l'équipement utilisateur (EQ_{U}), laquelle transmission est réalisée via une liaison sans fil de courte portée (L_{CP1}) dans le lieu de stationnement (P),
- activation de l'accès au véhicule élu (V₈) suite à la réception de l'autorisation d'accès (ID_{ACCES}) par l'équipement embarqué (EQ_{VE8}) dudit véhicule.

2. Procédé selon la revendication 1, dans lequel l'information de localisation consiste en un signal sonore et/ou visuel émis par le véhicule élu (V₈).

3. Procédé selon l'une des revendications précédentes, dans lequel l'information de localisation consiste en une information sur l'emplacement du véhicule élu (V₈) dans le lieu de stationnement (P).

4. Procédé selon l'une des revendications précédentes, comprenant les étapes suivantes :
- réception du signal d'activation par l'équipement informatique d'un premier véhicule (V₁₀) de la pluralité de véhicules (V₄, V₈, V₁₀, V₁₁),
- transmission du signal d'activation depuis l'équipement informatique (EQ_{VE10}) du premier véhicule (V₁₀), vers au moins l'équipement informatique (EQ_{VE11}) d'un deuxième véhicule (V₁₁) de la pluralité de véhicules,
- transmission du signal d'activation depuis l'équipement informatique (EQ_{VE11}) du deuxième véhicule (V₁₁), vers au moins l'équipement informatique (EQ_{VE4}) d'un troisième véhicule (V₄) de la pluralité de véhicules,
- et dans lequel la transmission du signal entre le premier véhicule (V₁₀), le deuxième véhicule (V₁₁) et troisième véhicule (V₄) est réalisée via une liaison sans fil de courte portée (L_{CP2}) dans le lieu de stationnement (P).

5. Procédé selon l'une des revendications précédentes, comprenant une étape consistant à arranger les équipements embarqués (EQ_{VE4}, EQ_{VE8}, EQ_{VE10}, EQ_{VE11}) sous forme d'un réseau sans fil maillé.

6. Procédé selon l'une des revendications précédentes, dans lequel le processus informatique logique d'élection (ELECT) comprend les étapes suivantes :
- élaboration d'une liste sélectionnable (LISTE) dans laquelle les véhicules de la pluralité de véhicules (V₈, V₁₀) sont classés par ordre décroissant de niveau de combustible et/ou de charge, chaque véhicule de la liste étant associé à un identifiant unique,
- transmission de la liste (TRANS_LISTE) à l'équipement utilisateur (EQ_{U}), depuis l'équipement embarqué (EQ_{VE8}, EQ_{VE10}) d'un véhicule de la pluralité de véhicules (V₈, V₁₀), laquelle transmission est réalisée via une liaison sans fil de courte portée (L_{CP1}) dans le lieu de stationnement (P),
- sélection (SELECT), depuis l'équipement utilisateur (EQ_{U}), d'un véhicule parmi les véhicules de la liste,
- transmission de l'identifiant unique du véhicule sélectionné (TRANS_CHOIX), à l'équipement embarqué (EQ_{VE8}, EQ_{VE10}) d'un véhicule de la pluralité de véhicules (V₈, V₁₀), depuis l'équipement utilisateur (EQ_{U}), laquelle transmission est réalisée via une liaison sans fil de courte portée (L_{CP1}) dans le lieu de stationnement (P),
- achèvement du processus de sélection (SELECT) par l'élection du véhicule sélectionné.

7. Procédé selon l'une des revendications précédentes, comportant les étapes suivantes :
- enregistrement, dans une mémoire (12₈, 12₁₀) de chaque équipement embarqué (EQ_{VE8}, EQ_{VE10}) des véhicules de la pluralité de véhicules (V₈, V₁₀), d'une liste d'identifiants utilisateurs et/ou d'identifiants d'équipements utilisateurs associés à des utilisateurs indésirables,
- intégration, dans l'autorisation d'accès (ID_{ACCES}), d'un identifiant utilisateur et/ou d'un identifiant de l'équipement utilisateur (EQ_{U}),
- pour activer l'accès au véhicule élu (V₈), vérification préalable, par l'équipement embarqué (EQ_{VE8}) dudit véhicule, que l'identifiant utilisateur et/ou l'identifiant de l'équipement utilisateur (EQ_{U}), ne sont pas enregistrés dans ladite liste.

8. Procédé selon l'une des revendications précédentes, comportant une étape consistant à intégrer un identifiant dans le signal d'activation, lequel identifiant est adapté pour déclencher le processus informatique logique d'élection (ELECT).

9. Procédé selon l'une des revendications précédentes, dans lequel la liaison sans fil de courte portée (L_{CP1}, L_{CP2}) utilise un protocole de communication de la famille suivante : Bluetooth, Wifi, Z-Wave, ANT, ZIGBEE, Infrarouge.

10. Système comportant au moins un équipement (EQ_{U}) d'un utilisateur (U) et au moins un équipement informatique embarqué (EQ_{VE4}, EQ_{VE8}, EQ_{VE10}, EQ_{VE11}) d'un véhicule (V₄, V₈, V₁₀, V₁₁), pour la mise en oeuvre des étapes du procédé des revendications 1 à 9.

11. Produit programme d'ordinateur comprenant des instructions de code pour l'exécution d'un procédé selon la revendication 1, lorsqu'il est exécuté par au moins un équipement informatique embarqué d'un véhicule, le processus informatique logique d'élection (ELECT) dudit procédé étant déclenché par la réception du signal d'activation par ledit équipement informatique embarqué (EQ_{VE04},EQ_{VE08},EQ_{VE10}, EQ_{VE11}) et mis en oeuvre dans ledit équipement informatique embarqué.

## Patentansprüche

1. Verfahren zum Aktivieren des Zugangs zu einem Fahrzeug innerhalb eines Fuhrparks mit Fahrzeugen (V₁ -V₁₃), die auf einem nicht von einem Datennetzwerk abgedeckten Parkplatz (P) abgestellt sind, umfassend die folgenden Schritte:
- Senden (TRANS_SIG) eines Aktivierungssignals aus einer Computerausrüstung (EQ_{U}) eines Benutzers (U), wobei das Senden über eine drahtlose Verbindung mit kurzer Reichweite (L_{CP1}) auf dem Parkplatz (P) durchgeführt wird,
- Empfangen des Aktivierungssignals durch bordeigene Computerausrüstungen (EQ_{VE8}, EQ_{VE10}) einer Vielzahl von Fahrzeugen (V₈, V₁₀) des Fuhrparks mit Fahrzeugen (V₁-V₁₃),
- Umsetzen eines logischen Computerprozesses (ELECT), der zur Auswahl mindestens eines Fahrzeugs (V₈) aus der Vielzahl von Fahrzeugen (V₈, V₁₀) führt, wobei der Prozess basiert:
-- auf einer Analyse des verfügbaren Kraftstofffüllstands und/oder des elektrischen Ladezustands der Fahrzeuge der Vielzahl von Fahrzeugen (V₈, V₁₀), oder
-- auf einer Analyse der Intensität, mit der die bordeigenen Computerausrüstungen (EQ_{VE8}, EQ_{VE10}) das Aktivierungssignal empfangen haben,
wobei der logische Computerauswahlprozess (ELECT) ausgelöst wird:
--- durch das Empfangen des Aktivierungssignals von mindestens einer der
bordeigenen Computerausrüstungen (EQ_{VE8}, EQ_{VE10}), wobei der Auswahlprozess dann in der oder den bordeigenen Computerausrüstung(en) umgesetzt wird, oder
--- durch das Empfangen, durch die Benutzerausrüstung (EQ_{U}), des verfügbaren Kraftstofffüllstands und/oder des elektrischen Ladezustands der Fahrzeuge der Vielzahl von Fahrzeugen (V₈, V₁₀) oder der Intensität, mit der die bordeigenen Computerausrüstungen (EQ _{VE8}, EQ_{VE10}) das Aktivierungssignal empfangen haben, wobei der Auswahlprozess dann in der Benutzerausrüstung umgesetzt wird,
- Identifizieren des ausgewählten Fahrzeugs:
-- durch das Senden, aus dem ausgewählten Fahrzeug (V₈) einer Information über die Lokalisierung des Fahrzeugs, und/oder
-- durch das Übertragen (TRANS_ID_{VE8}) einer oder mehrerer Identifikationsdaten (ID_{VE8}) des ausgewählten Fahrzeugs (V₈) an die Benutzerausrüstung (EQ_{U}), aus der bordeigenen Ausrüstung (EQ_{VE8}, EQ_{VE10}) eines Fahrzeugs der Vielzahl von Fahrzeugen (V₈, V₁₀), wobei das Übertragen über eine drahtlose Verbindung mit kurzer Reichweite (L_{CP1}) auf dem Parkplatz (P) durchgeführt wird,
- Übertragen (TRANS_ID_{ACCES}) einer Zugangsberechtigung (ID_{ACCES}) an die bordeigene Ausrüstung (EQ_{VE8}) des ausgewählten Fahrzeugs (V₈) von der Benutzerausrüstung (EQ_{U}) aus, wobei das Übertragen über eine drahtlose Verbindung mit kurzer Reichweite (L_{CP1}) auf dem Parkplatz (P) durchgeführt wird,
- Aktivieren des Zugangs zum ausgewählten Fahrzeug (V₈) nach dem Empfangen der Zugangsberechtigung (ACCESID) durch die bordeigene Ausrüstung (EQ_{VE8}) des Fahrzeugs.

2. Verfahren nach Anspruch 1, wobei die Lokalisierungsinformation aus einem akustischen und/oder visuellen Signal besteht, das vom ausgewählten Fahrzeug (V₈) gesendet wird.

3. Verfahren nach einem der vorstehenden Ansprüche, wobei die Lokalisierungsinformation aus einer Information über den Standort des ausgewählten Fahrzeugs (V8) auf dem Parkplatz (P) besteht.

4. Verfahren nach einem der vorstehenden Ansprüche, das die folgenden Schritte umfasst:
- Empfangen des Aktivierungssignals durch die Computerausrüstung eines ersten Fahrzeugs (V₁₀) der Vielzahl von Fahrzeugen (V₄, V₈, V₁₀, V₁₁),
- Übertragen des Aktivierungssignals aus der Computerausrüstung (EQ_{VE10}) des ersten Fahrzeugs (V₁₀) an mindestens die Computerausrüstung (EQ_{VE11}) eines zweiten Fahrzeugs (V₁₁) der Vielzahl von Fahrzeugen,
- Übertragen des Aktivierungssignals aus der Computerausrüstung (EQ_{VE11}) des zweiten Fahrzeugs (V₁₁) an mindestens die Computerausrüstung (EQ_{VE4}) eines dritten Fahrzeugs (V₄) der Vielzahl von Fahrzeugen,
- und wobei die Übertragung des Signals zwischen dem ersten Fahrzeug (₁₀), dem zweiten Fahrzeug (V₁₁) und dritten Fahrzeug (V₄) über eine drahtlose Verbindung mit kurzer Reichweite (L_{CP2}) auf dem Parkplatz (P) durchgeführt wird.

5. Verfahren nach einem der vorstehenden Ansprüche, das einen Schritt umfasst, der darin besteht, die bordeigenen Ausrüstungen (EQ_{VE4}, EQ_{VE8}, EQ_{VE10}, EQ_{VE11}) in Form eines drahtlosen Mesh-Netzwerks anzuordnen.

6. Verfahren nach einem der vorstehenden Ansprüche, wobei der logische Computerauswahlprozess (ELECT) die folgenden Schritte umfasst:
- Ausarbeiten einer auswählbaren Liste (LISTE), in der die Fahrzeuge der Vielzahl von Fahrzeugen (V₈, V₁₀) in absteigender Reihenfolge des Kraftstofffüllstand und/oder des Ladezustands eingestuft sind, wobei jedes Fahrzeug der Liste einer eindeutigen Kennung zugeordnet ist,
- Übertragen der Liste (TRANS_LISTE) an die Benutzerausrüstung (EQ_{U}) aus der bordeigenen Ausrüstung (EQ_{VE8}, EQ_{VE10}) eines Fahrzeugs der Vielzahl von Fahrzeugen (V₈, V₁₀), wobei das Übertragen über eine drahtlose Verbindung mit kurzer Reichweite (L_{CP1}) auf dem Parkplatz (P) durchgeführt wird,
- Auswählen (SELECT) aus der Benutzerausrüstung (EQ_{U}) eines Fahrzeugs aus den Fahrzeugen der Liste,
- Übertragen der eindeutigen Kennung des ausgewählten Fahrzeugs (TRANS_CHOIX) an die bordeigene Ausrüstung (EQ_{VE8}, EQ_{VE10}) eines Fahrzeugs der Vielzahl von Fahrzeugen (V₈, V₁₀) aus der Benutzerausrüstung (EQ_{U}), wobei das Übertragen über eine drahtlose Verbindung mit kurzer Reichweite (L_{CP1}) auf dem Parkplatz (P) durchgeführt wird,
- Abschließen des Auswahlprozesses (SELECT) durch das Auswählen des gewählten Fahrzeugs.

7. Verfahren nach einem der vorstehenden Ansprüche, das die folgenden Schritte beinhaltet:
- Speichern in einem Speicher (12₈, 12₁₀) jeder bordeigenen Ausrüstung (EQ_{VE8}, EQ_{VE10}) der Fahrzeuge der Vielzahl von Fahrzeugen (V₈, V₁₀), einer Liste von Benutzerkennungen und/oder Kennungen von Benutzerausrüstungen, die unerwünschten Benutzern zugeordnet sind,
- Integrieren einer Benutzerkennung und/oder einer Kennung der Benutzerausrüstung (EQ_{U}) in die Zugangsberechtigung (ACCES_{ID}),
- um den Zugang zum ausgewählten Fahrzeug (V₈) zu aktivieren, vorheriges Überprüfen durch die bordeigene Ausrüstung (EQ_{VE8}) des Fahrzeugs, dass die Benutzerkennung und/oder die Kennung der Benutzerausrüstung (EQ_{U}) nicht in der Liste gespeichert sind.

8. Verfahren nach einem der vorstehenden Ansprüche, das einen Schritt beinhaltet, der darin besteht, eine Kennung in das Aktivierungssignal zu integrieren, wobei die Kennung angepasst ist, um den logischen Computerauswahlprozess (ELECT) auszulösen.

9. Verfahren nach einem der vorstehenden Ansprüche, wobei die drahtlose Verbindung mit kurzer Reichweite (L_{CP1}, L_{CP2}) ein Kommunikationsprotokoll der folgenden Familie verwendet: Bluetooth, WLAN, Z-Wave, ANT, ZIGBEE, Infrarot.

10. System, das mindestens eine Ausrüstung (EQ_{U}) eines Benutzers (U) und mindestens eine bordeigene Computerausrüstung (EQ_{VE4}, EQ_{VE8}, EQ_{VE10}, EQ_{VE11}) eines Fahrzeugs (V₄, V₈, V₁₀, V₁₁) zum Umsetzen der Schritte des Verfahrens der Ansprüche 1 bis 9 beinhaltet.

11. Computerprogrammprodukt, das Codeanweisungen zum Ausführen eines Verfahrens nach Anspruch 1 umfasst, wenn es von mindestens einer bordeigenen Computerausrüstung eines Fahrzeugs ausgeführt wird, wobei der logische Computerauswahlprozess (ELECT) des Verfahrens durch das Empfangen des Aktivierungssignals durch die bordeigene Computerausrüstung (EQ_{VE04}, EQ_{VE08}, EQ_{VE10}, EQ_{VE11}) ausgelöst, und in der bordeigenen Computerausrüstung umgesetzt wird.

## Claims

1. A method for activating access to a vehicle within a fleet of vehicles (V₁ -V₁₃) parked in a parking space (P) not covered by a data network, comprising the following steps:
- transmitting (TRANS_SIG) an activation signal from a computer device (EQ_{U}) of a user (U), which transmission is carried out via a short-range wireless connection (L_{CP1}) in the parking space (P),
- receiving the activation signal by on-board computer devices (EQ_{VE8}, EQ_{VE10}) of a plurality of vehicles (V₈, V₁₀) of the fleet of vehicles (V₁-V₁₃),
- implementing a logical computing process (ELECT) leading to the selection of at least one vehicle (V₈) from the plurality of vehicles (V₈, V₁₀), which process is based:
-- on an analysis of the available fuel level and/or the electrical charge level of the vehicles of the plurality of vehicles (V₈, V₁₀), or
-- on an analysis of the intensity with which the on-board computer devices (EQ_{VE8}, EQ_{VE10}) received the activation signal,
the logical selection computer process (ELECT) being triggered:
--- by receiving the activation signal by at least one of the
on-board computer devices (EQ_{VE8}, EQ_{VE10}), which selection process is then implemented in said on-board computer device(s), or
--- by receiving, by the user device (EQ_{U}), the available fuel level and/or the electrical charge level of the vehicles of the plurality of vehicles (V₈, V₁₀) or the intensity with which the on-board computer device (EQ_{VE8}, EQ_{VE10}) has received the activation signal, which selection process is then implemented in said user device,
- identification of the selected vehicle:
-- by transmitting, from the selected vehicle (V₈), location information of said vehicle, and/or
**--** by transmitting (TRANS_ID_{VE8}) one or more identification data (ID_{VE8}) of the selected vehicle (V₈) to the user device (EQ_{U}), from the on-board device (EQ_{VE8}, EQ_{VE10}) of a vehicle of the plurality of vehicles (V₈, V₁₀), which transmission is carried out via a short-range wireless connection (L_{CP1}) in the parking space (P),
- transmitting (TRANS_ID_{ACCES}) an access authorisation (ID_{ACCES}) to the on-board device (EQ_{VE8}) of the selected vehicle (V₈) from the user device (EQ_{U}), which transmission is carried out via a short-range wireless connection (L_{CP1}) in the parking space (P),
- activating access to the selected vehicle (V₈) following receipt of the access authorisation (ID_{ACCES}) by the on-board device (EQ_{VE8}) of said vehicle.

2. Method according to claim 1, wherein the location information consists of an audible and/or visual signal emitted by the selected vehicle (V₈).

3. Method according to one of the preceding claims, wherein the location information consists of information on the location of the selected vehicle (V8) in the parking space (P).

4. Method according to one of the preceding claims, comprising the following steps:
- receiving the activation signal by the computer device of a first vehicle (V₁₀) of the plurality of vehicles (V₄, V₈, V₁₀, V₁₁),
- transmitting the activation signal from the computer device (EQ_{VE10}) of the first vehicle (V₁₀), to at least the computer device (EQ_{VE11}) of a second vehicle (V₁₁) of the plurality of vehicles,
- transmitting the activation signal from the computer device (EQ_{VE11}) of the second vehicle (V₁₁), to at least the computer device (EQ_{VE4}) of a third vehicle (V₄) of the plurality of vehicles,
- and wherein the transmission of the signal between the first vehicle (V₁₀), the second vehicle (V₁₁) and the third vehicle (V₄) is carried out via a short-range wireless connection (L_{CP2}) in the parking space (P).

5. Method according to one of the preceding claims, comprising a step of arranging the on-board devices (EQ_{VE4}, EQ_{VE8}, EQ_{VE10}, EQ_{VE11}) in the form of a meshed wireless network.

6. Method according to one of the preceding claims, wherein the logical selection computing process (ELECT) comprises the following steps:
- developing a selectable list (LISTE) wherein the vehicles of the plurality of vehicles (V₈, V₁₀) are sorted in descending order of fuel level and/or charge, each vehicle of the list being associated with a unique identifier,
- transmitting the list (TRANS_LISTE) to the user device (EQ_{U}) from the on-board device (EQ_{VE8}, EQ_{VE10}) of a vehicle of the plurality of vehicles (V₈, V₁₀), which transmission is carried out via a short-range wireless connection (L_{CP1}) in the parking space (P),
- selecting (SELECT), from the user device (EQ_{U}), a vehicle from the list of vehicles,
- transmitting the unique identifier of the selected vehicle (TRANS_CHOIX), to the on-board device (EQ_{VE8}, EQ_{VE10}) of a vehicle of the plurality of vehicles (V₈, V₁₀), from the user device (EQ_{U}), which transmission is carried out via a short-range wireless connection (L_{CP1}) in the parking space (P),
- completion of the selection process (SELECT) by selecting the selected vehicle.

7. Method according to one of the preceding claims, comprising the following steps:
- recording, in a memory (12₈, 12₁₀) of each on-board device (EQ_{VE8}, EQ_{VE10}) of the vehicles of the plurality of vehicles (V₈, V₁₀), a list of user identifiers and/or user device identifiers associated with unwanted users,
- integration, in the access authorisation (ID_{ACCES}), of a user identifier and/or a user device identifier (EQ_{U}),
- in order to activate access to the selected vehicle (V₈), prior verification, by the on-board device (EQ_{VE8}) of said vehicle, that the user identifier and/or the user device identifier (EQ_{U}) are not recorded in said list.

8. Method according to one of the preceding claims, including a step of integrating an identifier in the activation signal, which identifier is adapted to trigger the logical election computing process (ELECT).

9. Method according to one of the preceding claims, wherein the short-range wireless connection (L_{CP1}, L_{CP2}) uses a communication protocol of the following family: Bluetooth, Wifi, Z-Wave, ANT, ZIGBEE, Infrared.

10. System comprising at least one device (EQ_{U}) of a user (U) and at least one on-board computer device (EQ_{VE4}, EQ_{VE8}, EQ_{VE10}, EQ_{VE11}) of a vehicle (V₄, V₈, V₁₀, V₁₁), for implementing the steps of the method of claims 1 to 9.

11. A computer program product comprising code instructions for executing a method according to claim 1, when it is executed by at least one on-board computer device of a vehicle, the logical selection computing process (ELECT) of said method being triggered by receiving the activation signal by said on-board computer device (EQ_{VE04} ,EQ_{VE08} ,EQ_{VE10}, EQ_{VE11}) and implemented in said on-board computer device.
